# EUROPEAN PATENT SPECIFICATION

(11) **EP 2 316 670 B1**
(45) Date of publication and mention of the grant of the patent: **11.12.2013**
(21) Application number: 10176522.0
(22) Date of filing: 14.09.2010
(51) Int. Cl.: B60D 1/14

(54) **Towing device of light trailers for vehicles**
Kupplungsvorrichtung leichten Fahrzeuganhängers
Dispositif d'attelage de remorques légères pour véhicules

(30) Priority: 03.11.2009 IT BS20090198
(43) Date of publication of application: 04.05.2011
(73) Proprietor: Archetti Technology S.r.l., 25030 Coccaglio, Brescia (IT)
(72) Inventor: Inverardi, Angelo, 25030 Coccaglio, Brescia (IT)
(74) Representative: Pulieri, Gianluca Antonio

(56) References cited:
- DE-A1-102005 038 150
- DE-A1-102008 039 807
- US-A- 3 528 684
- US-A- 3 838 872
- US-A- 4 266 817

## Description

The present invention relates to a towing device for light trailers, in particular for commercial vehicles such as lorries, vans and the like, and such as disclosed in US 4,266,817.

A towing device, in the trade usually called a "towbar" in its entirety, is an accessory consisting of a tubular fitting attached to the rear of the vehicle frame, suitable for connecting to a trailer, such as a trolley and the like.

In order to provide a towing device which is very economical to produce and easy to install said devices have, up to now, been made using commercial tubing, fitted with lateral connection plates, usually welded, for attachment to the vehicle frame.

However, the solutions known today have some drawbacks, linked mainly to the weight and sometimes to the low structural resistance in some points.

The purpose of the present invention is to make a towing device for light trailers for vehicles which satisfies the requirements of the sector as regards economical production and simple assembly while at the same time overcoming the drawbacks spoken of.

The characteristics and advantages of the towing device according to the present invention will be evident from the following description made by way of a nonlimiting example, with reference to the attached figures, wherein:

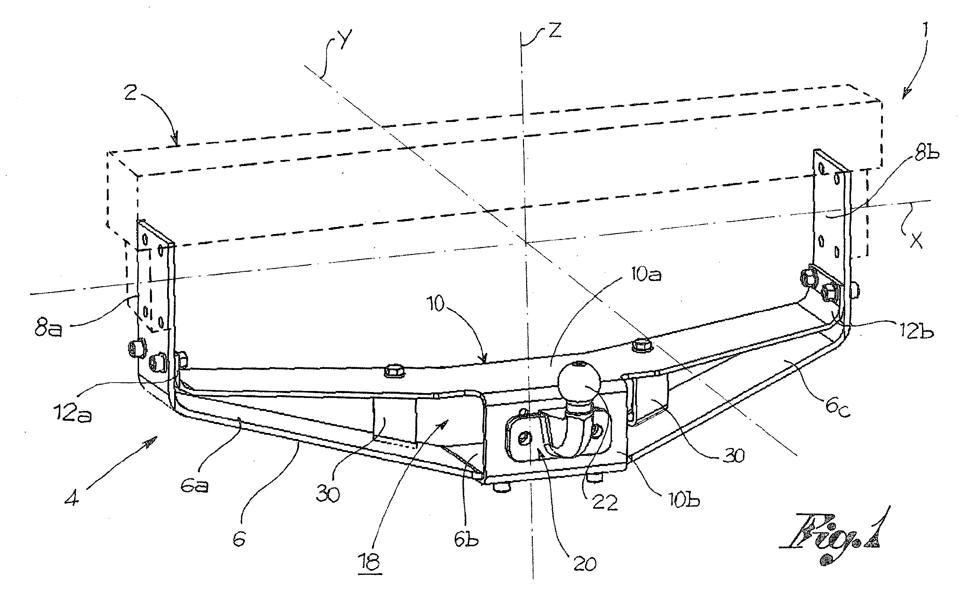

- figure 1 shows an axonometric view of an assembly comprising a towing device according to the present invention, in a preferred embodiment variation;

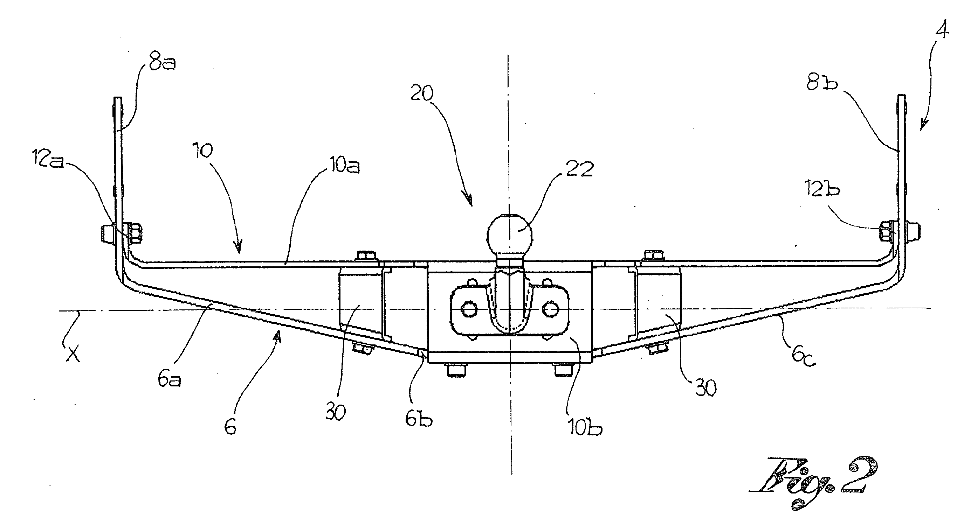

- figure 2 shows a frontal anterior view of the device in figure 1;

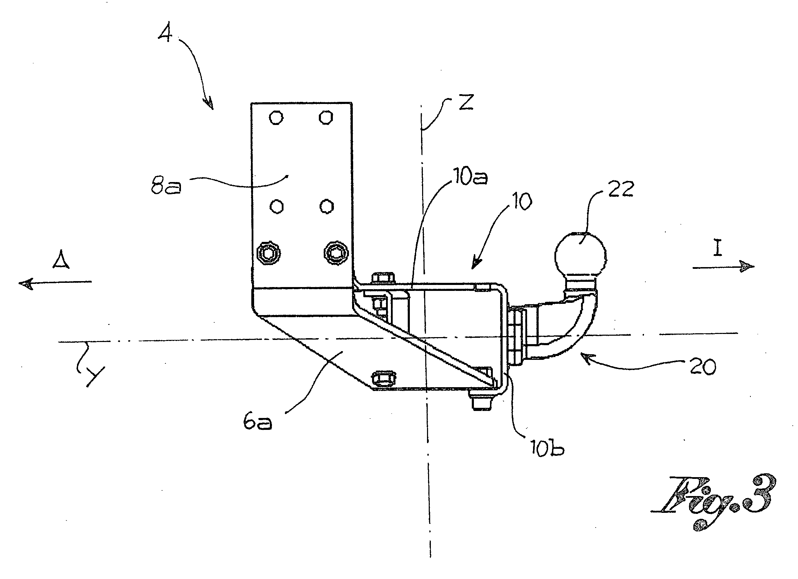

- figure 3 shows a lateral view of the device in figure 1;

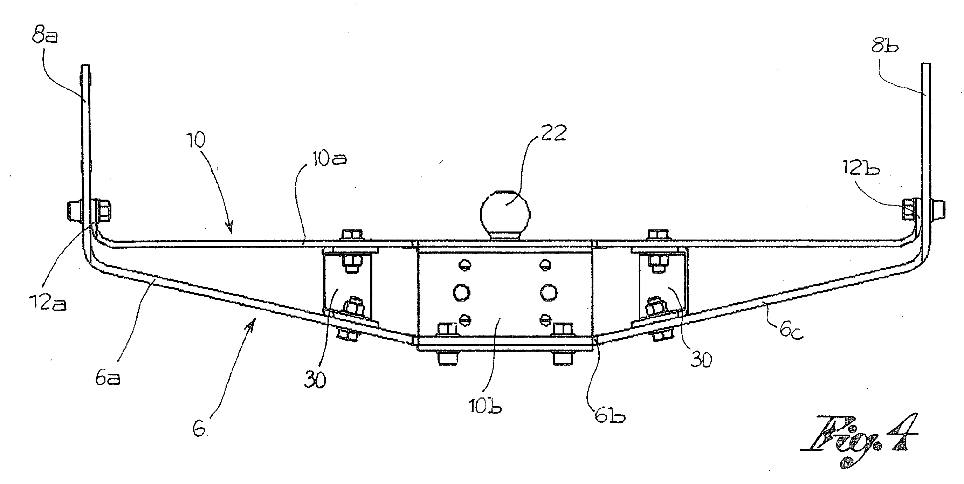

- figure 4 shows a frontal rear view of the device in figure 1;

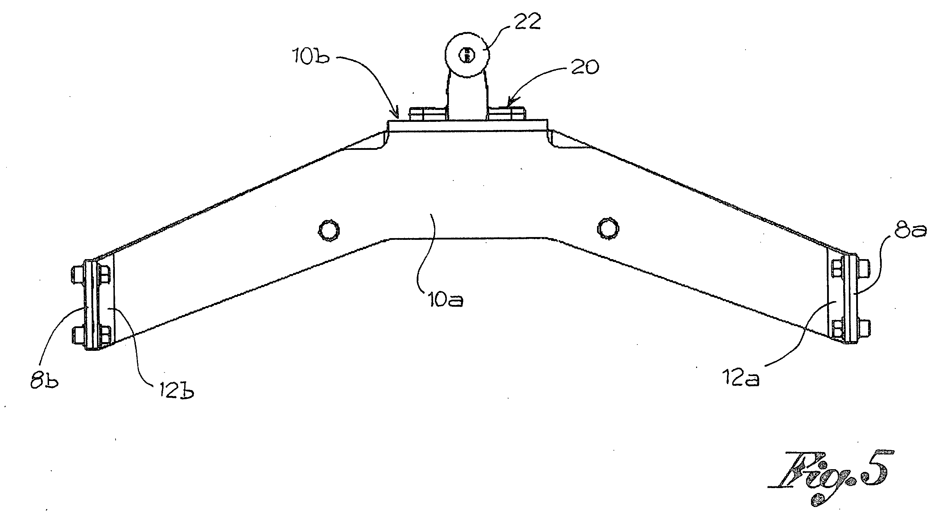

- figure 5 shows a ground view from above of the device in figure 1.

With reference to the attached figures, reference numeral 1 globally denotes an assembly comprising a portion of frame 2, which is part of the vehicle frame, and a towing device 4, in particular for commercial vehicles for towing light trailers, such as trolleys, caravans and the like.

The device 4 has a main extension along a transversal axis X, substantially orthogonal when the device 4 is fitted to the vehicle frame; generally, the transversal axis X is perpendicular to a longitudinal axis of advancement Y, coinciding with the direction of advancement of the vehicle.

Furthermore, a vertical axis Z is defined as the axis perpendicular to the transversal axis X and the longitudinal axis Y.

The device 4 comprises a lower beam 6 which extends mainly along the transversal axis X.

Preferably, the lower beam 6 is composed of a flat beam, in particular made from sheet metal, if necessary shaped and folded as required.

According to a preferred embodiment, the lower beam 6 is a concave shape facing upwards, and in particular has, from one transversal extremity to the other:

- a first lateral section 6a, substantially flat and sloping downwards;

- an intermediate section 6b, jointed to the first section, substantially flat and horizontal; and

- a second lateral section 6c, jointed to the intermediate section, substantially flat and sloping upwards.

In other words, the lower beam 6 has a V-shaped profile.

Preferably, the lower beam 6 is made in a single piece, composed of folded sheet metal, wherein the folding lines define the connections between the sections 6a, 6b, 6c.

In addition, according to a preferred embodiment, the lower beam comprises an attachment portion at both ends 8a, 8b, jointed to the extremities of the lateral section 6a, 6c, having a substantially vertical extension.

Preferably, the lower beam 6 is made in a single piece composed of folded sheet metal, wherein the folding lines also define the connections between the lateral sections 6a, 6b, 6c and the attachment portions 8a, 8b.

Said attachment portions form an example of embodiment of attachment means suitable for connecting the towing device 4 to the portion of frame 2 of the vehicle.

Preferably, the lateral sections 6a, 6c project along the longitudinal axis Y from the attachment portions 8a, 8b; in particular, in the configuration in which the towing device 4 is fitted to the portion of frame 2 of the vehicle, the lateral sections project along the longitudinal axis Y from the attachment portions in the direction opposite to that of driving forward (direction of the arrow A) in a straight line of the vehicle. In other words again, the lateral sections project along the longitudinal axis Y from the attachment portions in the reverse direction (direction of the arrow I) in a straight line of the vehicle.

Preferably, moreover, the width of the lower beam 6, defined as the size of the beam along the longitudinal axis Y, increases downwards and/or increases in the reverse direction I, along which the lateral portions project in relation to the attachment portions.

Furthermore, the towing devices 4 comprise an upper beam 10, which extends mainly along the transversal axis X, connected to the lower beam 6, for example at its extremities.

Preferably, the upper beam 10 is contained transversally between the attachment portions 8a, 8b of the lower beam 6; preferably, moreover, the upper beam 10 is connected to the lower beam 6 by bolting its extremities to the attachment portions 8a, 8b of the lower beam 6.

Preferably, the upper beam 10 comprises a, substantially flat, central portion 10a and a wing 10b connected to the central portion 10a, extending from it, in a bridge configuration, as far as the lower beam 6, to which it is connected.

In particular, preferably, the wing 10b is placed in a symmetrical position between the transversal extremities of the upper beam 10; preferably it is connected to the intermediate section 6b of the lower beam 6, for example by bolts, and extends as far as the lower surface of the intermediate section 6b, so as to support the lower beam 6 from underneath.

Preferably, moreover, the upper beam comprises at its extremities connection portions 12a, 12b projecting vertically from the central portion 10, destined to be bolted to the attachment portions 8a, 8b of the lower beam 6.

Preferably, the upper beam 10 is made in a single piece composed of folded sheet metal, wherein the folding lines define the connections between the central section 10a and/or the wing 10b (which is thereby folded) and/or the connection portions 12a, 12b (which are thereby folded).

Preferably, moreover, the upper beam 10 has a structure vertically overlaying the lower beam 6, so that the orthogonal projection of the central portion 10a of the upper beam 10 along the vertical axis Z on the lower beam 6 is entirely contained on the surfaces of the lateral sections 6a, 6c and of the intermediate section 6b.

As a result, even the central portion 10a of the upper beam 10 projects along the reverse direction I of the longitudinal direction Y of the attachment portions 8a, 8b.

Preferably, the contour of the lower beam 6, and in particular of the lateral sections 6a, 6c and of the intermediate section 6b, and the contour of the upper beam 10, and in particular of its central portion 10a, define a cavity 18 between the lateral sections 6a, 6c and intermediate sections 6b and the central portion 10a having contour which increases from the transversal extremity towards the centre.

In other words, the lateral sections 6a, 6c and intermediate 6b sections of the lower beam 6 are concave towards the central portion 10a of the upper beam.

The towing device 4, comprises, in addition, a towing hook 20, connected to the lower beam 6 and/or to the upper beam 10, having a shaped element, for example a spherical element 22, for coupling to the corresponding trailer hook.

Preferably, the towing hook 20 is connected to the outside of the wing 10b of the upper beam 10.

Preferably, moreover, the towing device 4 comprises at least one reinforcement element 30, positioned in the cavity 18, connected at its extremities to the upper beam 10 and to the lower beam 6, for example by bolts.

In one embodiment, the reinforcement elements 30 are positioned at the sides of the wing 10b of the upper beam 10 or at the sides of the intermediate section 6b of the lower beam 6, and connect the lateral sections 6a, 6c of the lower beam 6 to the central portion 10a of the upper beam 10.

Preferably, the strengthening elements 30 are portions of folded sheet metal.

Innovatively, the towing device according to the invention is extremely reliable, economical to manufacture and simple to fit.

In particular, the structure of the device enables an optimal distribution of the mass, bearing in mind the distribution of the loads.

## Claims

1. Towing device for vehicles (4) in particular for the light towing of trolleys, caravans and similar trailers comprising:
- attachment devices able to join the towing device (4) to a portion of a frame (2) of the vehicle;
- a lower beam (6) extending along a transversal axis (X), a vertical axis (Z) being defined as the axis perpendicular to the transversal axis (X);
- an upper beam (10) extending along the transversal axis (X) distanced vertically at least in,part from the lower beam (6), connected to the extremities of the lower beam (6),wherein
the lower beam (6) and/or the upper beam (10) are made in a single piece composed of folded sheet metal,
wherein the lower beam (6) comprises sloping lateral sections (6a, 6c) and an intermediate section between the lateral sections (6a, 6c), **characterized by** the fact that the attachment devices comprise attachment portions (8a, 8b) of the lower beam (6), each portion jointed to its respective lateral section (6a, 6b) and having a vertical extension.

2. Device according to claim 1, wherein the lateral sections (6a, 6c) project longitudinally from the attachment portions (8a, 8b), from a side of these.

3. Device according to any of the previous claims wherein the width of the lateral sections increases in a downward direction.

4. Device according to any of the previous claims wherein the width of the lateral sections (6a, 6c) increases moving away from the attachment portions (8a, 8b) in a longitudinal direction.

5. Device according to any of the previous claims, wherein the upper beam (10) comprises an essentially flat central portion connected to the extremities of the lower beam (6) and a wing projecting longitudinally and connected to the lower beam (6).

6. Device according to claim 5, wherein the wing (10b) projects from the central portion (10a) of the upper beam (10) and connects to the intermediate section (6b) of the lower beam (6).

7. Device according to claim 5 or 6, wherein the wing (10b) is connected to the lower beam (6), supporting it from below.

8. Device according to any of the previous claims comprising a towing hook (20) comprising a coupling element (22) destined to form a shaped coupling with the coupling hook (11).

9. Device according to claim 8 and to any of the claims from 5 to 7, wherein the towing hook is connected to the wing (10b) of the upper beam (10).

10. Device according to any of the previous claims comprising at least one reinforcement element (30) connected to the upper beam and to the lower beam, inside the cavity (18) between said beams.

11. Device according to any of the previous claims wherein the lower beam (6) and the upper beam (10) form a cavity (18) increasing transversally from the extremity towards the centre.

12. Device according to any of the previous claims wherein the lower beam (6) faces the upper beam (10) vertically in a concave direction.

## Patentansprüche

1. Kupplungsvorrichtung für Fahrzeuge (4), insbesondere für die Leichtkupplung von Wagen, Wohnwagen und ähnlichen Anhängern, die umfasst:
- Befestigungsvorrichtungen, die fähig sind, die Kupplungsvorrichtung (4) mi einem Abschnitt eines Rahmens (2) des Fahrzeugs zu kuppeln;
- einen unteren Träger (6), der sich entlang einer transversalen Achse (X) erstreckt, wobei eine vertikale Achse (Z) als die Achse senkrecht zu der transversalen Achse (X) definiert ist;
- einen oberen Träger (10), der sich entlang der transversalen Achse (X) erstreckt, der vertikal wenigstens teilweise von dem unteren Träger (6) beabstandet ist, der mit den äußersten Enden des unteren Trägers (6) verbunden ist, wobei
der untere Träger (6) und/oder der obere Träger (10) in einem einzigen Stück gefertigt sind, das aus gefaltetem Metallblech zusammengesetzt ist,
wobei der untere Träger (6) geneigte seitliche Abschnitte (6a, 6c) und einen Zwischenabschnitt zwischen den seitlichen Abschnitten (6a, 6c) umfasst, **gekennzeichnet durch** die Tatsache, dass die Befestigungsvorrichtungen Befestigungsabschnitte (8a, 8b) des unteren Trägers (6) umfassen, wobei jeder Abschnitt mit seinem jeweiligen seitlichen Abschnitt (6a, 6b) zusammengefügt ist und eine vertikale Ausdehnung hat.

2. Vorrichtung nach Anspruch 1, wobei die seitlichen Abschnitte (6a, 6c) von den Befestigungsabschnitten (8a, 8b) von einer Seite dieser längs vorstehen.

3. Vorrichtung nach einem der vorhergehenden Ansprüche, wobei die Breite der seitlichen Abschnitte in einer Abwärtsrichtung zunimmt.

4. Vorrichtung nach einem der vorhergehenden Ansprüche, wobei die Breite der seitlichen Abschnitte (6a, 6b) sich weg von den Befestigungsabschnitten (8a, 8b) in einer Längsrichtung bewegend zunimmt.

5. Vorrichtung nach einem der vorhergehenden Ansprüche, wobei der obere Träger (10) einen im Wesentlichen flachen mittleren Abschnitt, der mit den äußersten Enden des unteren Trägers (6) verbunden ist, und eine Flügelplatte, die längs vorsteht und mit dem unteren Träger (6) verbunden ist, umfasst.

6. Vorrichtung nach Anspruch 5, wobei die Flügelplatte (10b) von dem mittleren Abschnitt (10a) des oberen Trägers (10) vorsteht und mit dem Zwischenabschnitt (6b) des unteren Trägers (6) verbindet.

7. Vorrichtung nach Anspruch 5 oder 6, wobei die Flügelplatte (10b) mit dem unteren Träger (6) verbunden ist und ihn von unten stützt.

8. Vorrichtung nach einem der vorhergehenden Ansprüche, der einen Kupplungshaken (20) umfasst, der ein Kupplungselement (22) umfasst, dass dafür bestimmt ist, eine Formkupplung mit dem Kupplungshaken (11) zu bilden.

9. Vorrichtung nach Anspruch 8 und jedem der Ansprüche 5 bis 7, wobei der Kupplungshaken mit der Flügelplatte (10b) des oberen Trägers (10) verbunden ist.

10. Vorrichtung nach einem der vorhergehenden Ansprüche, die wenigstens ein Verstärkungselement (30) im Inneren des Hohlraums (18) zwischen den Träger umfasst, das mit dem oberen Träger und mit dem unteren Träger verbunden ist.

11. Vorrichtung nach einem der vorhergehenden Ansprüche, wobei der untere Träger (6) und der obere Träger (10) einen Hohlraum (18) bilden, der transversal von dem äußersten Ende in Richtung der Mitte größer wird.

12. Vorrichtung nach einem der vorhergehenden Ansprüche, wobei der untere Träger (6) dem oberen Träger (10) vertikal in einer konkaven Richtung gegenüber liegt.

## Revendications

1. Dispositif d'attelage pour véhicules (4), en particulier pour l'attelage léger de chariots, de caravanes et de remorques similaires comprenant :
- des dispositifs de fixation capables de raccorder le dispositif d'attelage (4) à une partie du châssis (2) du véhicule ;
- une barre inférieure (6) s'étendant le long d'un axe transversal (X), un axe vertical (Z) étant défini comme étant l'axe perpendiculaire à l'axe transversal (X) ;
- une barre supérieure (10) s'étendant le long de l'axe transversal (X) éloigné verticalement, au moins partiellement, de la barre inférieure (6), raccordée aux extrémités de la barre inférieure (6),
la barre inférieure (6) et/ou la barre supérieure (10) étant fabriquées d'une seule pièce composée de tôle pliée, la barre inférieure (6) comprenant des segments latéraux (6a, 6c) inclinés et un segment intermédiaire entre les segments latéraux (6a, 6c), **caractérisé par le fait que** les dispositifs de fixation comprennent les parties de fixation (8a, 8b) de la barre inférieure (6), chaque partie étant raccordée à son segment latéral (6a, 6b) respectif et ayant une extension verticale.

2. Dispositif selon la revendication 1, dans lequel les segments latéraux (6a, 6c) dépassent longitudinalement des parties de fixation (8a, 8b) à partir d'un côté de celles-ci.

3. Dispositif selon l'une quelconque des revendications précédentes, dans lequel la largeur des segments latéraux augmente en allant vers le bas.

4. Dispositif selon l'une quelconque des revendications précédentes, dans lequel la largeur des segments latéraux (6a, 6c) augmente lorsqu'on s'éloigne des parties de fixation (8a, 8b) dans la direction longitudinale.

5. Dispositif selon l'une quelconque des revendications précédentes, dans lequel la barre supérieure (10) comprend une partie centrale essentiellement plate raccordée aux extrémités de la barre inférieure (6) et une aile dépassant longitudinalement et raccordée à la barre inférieure (6).

6. Dispositif selon la revendication 5, dans lequel l'aile (10b) dépasse de la partie centrale (10a) de la barre supérieure (10) et se raccorde au segment intermédiaire (6b) de la barre inférieure (6).

7. Dispositif selon la revendication 5 ou 6, dans lequel l'aile (10b) est raccordée à la barre inférieure (6), la supportant par le dessous.

8. Dispositif selon l'une quelconque des revendications précédentes, comprenant un crochet d'attelage (20) comprenant un élément d'accouplement (22) destiné à former avec le crochet d'accouplement (11) un accouplement profilé.

9. Dispositif selon la revendication 8 et selon l'une quelconque des revendications 5 à 7, dans lequel le crochet d'attelage est raccordé à l'aile (10b) de la barre supérieure (10).

10. Dispositif selon l'une quelconque des revendications précédentes, comprenant au moins un élément de renforcement (30) raccordé à la barre supérieure et à la barre inférieure, à l'intérieur de la cavité (18) entre lesdites barres.

11. Dispositif selon l'une quelconque des revendications précédentes, dans lequel la barre inférieure (6) et la barre supérieure (10) forment une cavité (18) augmentant transversalement de l'extrémité vers le centre.

12. Dispositif selon l'une quelconque des revendications précédentes, dans lequel la barre inférieure (6) fait face à la barre supérieure (10) verticalement de manière concave.
